# EUROPEAN PATENT SPECIFICATION

(11) **EP 3 719 937 B1**
(45) Date of publication and mention of the grant of the patent: **04.01.2023**
(21) Application number: 18724114.6
(22) Date of filing: 22.05.2018
(51) Int. Cl.: G04G 19/00, G04G 17/02, H01R 13/64, H01R 13/62, H02J 7/00, G04C 10/00

(54) **CHARGING DEVICE AND ELECTRONIC APPARATUS**
LADEVORRICHTUNG UND ELEKTRONISCHE VORRICHTUNG
DISPOSITIF DE CHARGE ET APPAREIL ÉLECTRONIQUE

(30) Priority: 30.11.2017 CN 201711239687
(43) Date of publication of application: 07.10.2020
(73) Proprietor: Mobvoi Information Technology Co., Ltd., Beijing 100094 (CN)
(72) Inventor: LI, Jianguo, Beijing 100094 (CN); WANG, Baolin, Beijing 100094 (CN)
(74) Representative: von Bülow & Tamada
(86) International application number: PCT/CN2018/087898
(87) International publication number: WO 2019/104959

(56) References cited:
- CN-A- 106 410 944
- CN-A- 106 849 236
- CN-A- 107 834 305
- CN-U- 204 361 885
- CN-U- 204 927 677
- CN-U- 205 811 604
- JP-A- 2003 153 456
- US-A1- 2014 113 461
- US-A1- 2015 326 045
- US-A1- 2016 223 992

## Description

### TECHNICAL FIELD

The present disclosure relates to the field of electronic devices, and specifically to a system.

### BACKGROUND

The existing wearable devices may be charged in various manners. In one manner, a wearable device is equipped with a universal serial bus (USB) interface and is charged through a data wire connected to the USB interface. In another manner, the wearable device is equipped with a wireless induction coil, which cooperates with a wireless induction charging dock for charging the wearable device. In yet another manner, the wearable device is equipped with a Pogo pin connector (a precise connector applied to electronic devices), which cooperates with a Pogo pin charging dock for charging the wearable device.

Nevertheless, in the case of charging with the USB interface, misplug occurs frequently and the USB interface can be damaged. Furthermore, the USB interface provided on the wearable device will reduce the waterproof performance of the wearable device. In the case of charging in the manner of wireless induction, the wearable device has to contain a coil made of copper and the cost of the wearable device will rise. In the case of charging with the Pogo pin connector, misconnect the positive and negative electrodes of the existing Pogo pin connector are usually not differentiated. As such, the user can easily misconnect the positive and negative electrodes, which makes that the wearable device is unable to be charged normally and even the risk of destroying internal circuit of the wearable device exits.

The US Patent application US20150326045 discloses a charging apparatus including a cradle and a charger module. The cradle includes a space for holding an electronic device, and includes at least one magnetic member for providing a magnetic connection with the electronic device. The charger module is connected with the cradle and supplies electric power to the electronic device.

The US patent application US20160223992 discloses a wearable device including a first strap portion attached or detached from a body portion and provided to allow the body portion to be worn on a human body, a second strap portion provided in the body portion to be exchanged with the first strap portion, electrically connected to the body portion, and having at least one member to provide a signal generated from the members to the body portion, and a connecting portion electrically connecting the body portion with the first strap portion or electrically connecting the body portion with the second strap portion.

### SUMMARY

The main objective of the present disclosure is to provide a charger and an electronic device, so as to solve the technical problem in which the electronic device is protected by a fool-proof structure when being connected for charging, preventing the positive and negative electrodes from being misconnected during charging. Aspects of the invention are defined in independent system claim 1. Further embodiments are defined by the dependent claims.

The objective of the present disclosure and the technical problem to be solved may be further implemented with the solution described below. The present disclosure provides a system, which includes:
a charger, which includes:
a base, which has a holding groove, the holding groove is adapted to a back shell of a wearable device, a Pogo pin connector is arranged in the holding groove; and
a first fool-proof structure, which comprises a first insert and a second insert, the first insert and the second insert are arranged at an edge of the holding groove, the first insert has a width less than that of the second insert, the first insert is used to match with a first locating structure at a side edge of the wearable device; and the first fool-proof structure is configured to match with the first locating structure at a side edge of a wearable device and wherein the Pogo Pin connector of the charger is connected to a Pogo Pin connector of the wearable device for charging the wearable device only when the first insert of the first fool-proof structure matches with the first locating structure of the wearable device;
the wearable device, which includes a first locating structure, the first locating structure is arranged at a side edge of the wearable device and matches with the first insert of the charger. The first locating structure is an interspace between two function buttons at the side edge of the wearable device.

The objective of the present disclosure and the technical problem to be solved may be further implemented in the manners described below.

Preferably, for the electronic device described above, the wearable device further includes a second fool-proof structure, the second fool-proof structure includes:
at least one third magnet, which is arranged on an inner surface of the back shell of the wearable device, the third magnet has an N pole, which faces the inner surface of the back shell and is used to engage with the first magnet of the charger; and
at least one fourth magnet, which is arranged on the inner surface of the back shell of the wearable device, the fourth magnet has an S pole, which faces the inner surface of the back shell and is used to engage with the second magnet of the charger.

Preferably, for the electronic device described above, the at least one third magnet includes multiple third magnets, the third magnets are evenly arranged on the inner surface of the back shell.

Preferably, for the electronic device described above, the at least one fourth magnet includes multiple fourth magnets, the fourth magnets are evenly arranged on the inner surface of the back shell.

Preferably, for the electronic device described above, multiple installation grooves are arranged on the inner surface of the back shell, the at least one third magnet and the at least one fourth magnet are respectively arranged in the installation grooves.

Preferably, for the electronic device described above, the wearable device further includes at least one magnetic flux concentrating cover, the number of the at least one magnetic flux concentrating cover equals to a sum of a number of the at least one third magnet and a number of the at least one fourth magnet,
the at least one magnetic flux concentrating cover is respectively arranged on a surface of an S pole of the third magnet and a surface of an N pole of the fourth magnet.

Preferably, for the electronic device described above, the second fool-proof structure further includes:
a bulge structure, which is arranged on an outer surface of the back shell and is used to match with the locating groove of the charger; and/or
a groove structure, which is arranged on the outer surface of the back shell and is used to match with the locating bulge of the charger.

Preferably, for the electronic device describe above, the bulge structure is arranged on at the side edge of the back shell or on the outer surface of the back shell; and/or the groove structure is arranged at the side edge of the back shell or on the outer surface of the back shell.

With the solution described above, the charger and the electronic device of the present disclosure have at least advantages described below.

In the solution of the present disclosure, the electronic device has the first fool-proof structure. When the charger is connected to the wearable device to charge the wearable device, the Pogo pin connector located in the holding groove of the charger can be connected to the Pogo pin connector of the wearable device for charging the wearable device only when the first fool-proof structure matches with the first locating structure at the side edge of the wearable device. In the related art, the connection to the wearable device has certain drawbacks. For example, in the case of charging with the USB interface, misplug occurs frequently and the USB interface can be damaged. Furthermore, the USB interface provided on the wearable device will reduce the waterproof performance of the wearable device. In the case of charging in the manner of wireless induction, the wearable device has to contain a coil made of copper and the cost of the wearable device will rise. In the case of charging with the Pogo pin connector, misconnect the positive and negative electrodes of the existing Pogo pin connector are usually not differentiated. As such, the user can easily misconnect the positive and negative electrodes, which makes that the wearable device is unable to be charged normally and even the risk of destroying internal circuit of the wearable device exits. In comparison with the related art, the present disclosure provides a charger provided with the first fool-proof structure, which makes that the charger and the wearable device, which are connected for charging, can only be connected in one direction, i.e., the first insert of the first fool-proof structure is inserted into the first locating structure of the wearable device. When the direction is changed, the second insert cannot match with the first locating structure of the wearable device, because the second insert has a width larger than that of the first insert, thus the charger and the wearable device cannot be connected for charging. This ensures that the positive and negative electrodes of the Pogo pin connector of the charger can be correctly connected to the positive and negative electrodes of the Pogo connector of the wearable device when the charger and the wearable device are connected for charging, thereby avoiding the misconnection of the positive and negative electrodes. In addition, when the back shell of the wearable device is made of metal, the first fool-proof structure can prevent the back shell of the wearable device from directly contacting the Pogo pin connector of the charger. In other words, the back shell can be held in the holding groove of the charger only when the first fool-proof structure matches with the first locating structure of the wearable device. This avoids the occurrence of short-circuiting caused by the direct contact between the Pogo pin connector in the holding groove of the charger and the back shell made of metal, and thus ensure the safe use of the charger.

Those described below are merely summary of the solution of the present disclosure. In order to provide further understanding of the technical means of the present disclosure and the implementation of the technical means according to the specification, the preferred embodiments of the present disclosure are provided below in detail with reference to the accompanying drawings.

### BRIEF DESCRIPTION OF DRAWINGS

Fig. 1 is a structure diagram of a charger provided by an embodiment of the present disclosure;
Fig. 2 is an exploded diagram of a charger provided by an embodiment of the present disclosure;
Fig. 3 is a structure diagram of an electronic device provided by an embodiment of the present disclosure;
Fig. 4 is a structure diagram of a wearable device provided by an embodiment of the present disclosure;
Fig. 5 is a structure diagram of a back shell of a wearable device provided by an embodiment of the present disclosure;
Fig. 6 is an exploded diagram of a back shell of a wearable device provided by an embodiment of the present disclosure;
Fig. 7 is a structure diagram of a back shell of another wearable device provided by an embodiment of the present disclosure; and
Fig. 8 is an exploded diagram of a back shell of another wearable device provided by an embodiment of the present disclosure.

### DETAILED DESCRIPTION

In order to further explain the technical means of the present disclosure for achieving the desired objective and the effects thereof, the specific implementations, methods, structures, features and effects of the wearable device, the external device and electronic device according to the present disclosure are described hereinafter in detail. In the description below, each "one embodiment" or "an embodiment" refers to a different embodiment or a same embodiment. Furthermore, the specific features, structures, or characteristics in one or more embodiments may be combined with each other in any way.

### Embodiment 1

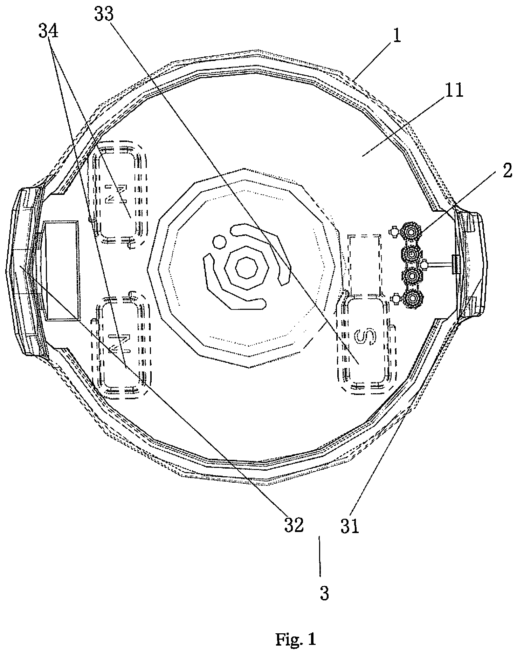

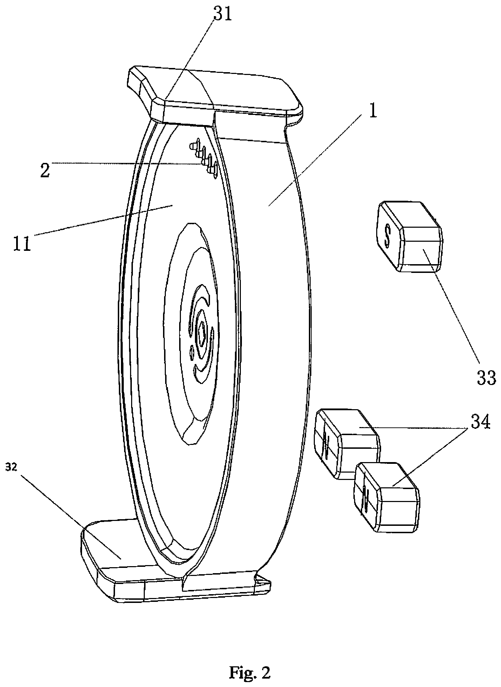

As shown in Figs. 1 and 2, the embodiment 1 of the present disclosure provides a charger. The charger includes a base 1 and a first fool-proof structure 3. The base 1 has a holding groove 11 adapted to a back shell of a wearable device. A Pogo pin connector 2 is arranged in the holding groove 11. The first fool-proof structure 3 includes a first insert 31 and a second insert 32, which are arranged at an edge of the holding groove 11. The first insert 31 has a width less than that of the second insert 32. The first insert 31 is used to match with a first locating structure of the wearable device.

Specifically, the base has a main function of charging the wearable device. The shape of the holding groove of the base needs to match with the shape of the back shell of the wearable device. The electronic component for implementing the charging function is arranged in the base. The base may further be connected to a connecting wire, which is connected to an electrical outlet. The connecting wire is connected to the Pogo pin connector of the holding groove. The first insert and the second insert of the first fool-proof structure are dimensioned in such a way that the width of the first insert is less than the width of the second insert. Therefore, the first insert matches with the first locating structure of the wearable device, i.e., the first insert may be inserted into the first locating structure. The first locating structure is an interspace between two buttons at the side edge of the wearable device. For example, the first locating structure may be the interspace between two function buttons at the side edge of a smartwatch. The first insert and the second insert may have a same shape. The first insert may be a block with a rectangular section, or a block with a rectangular section and a radian. The arrangement of the second insert is the same as that of the first insert. The base, the first insert and the second insert may be molded in one body. For example, the base, the first insert and the second insert may be injection molded in one body from plastic.

In the solution of the present disclosure, the charger is provided with a first fool-proof structure. When the charger is connected to the wearable device to charge the wearable device, the Pogo pin connector located in the holding groove of the charger can be connected to the Pogo pin connector of the wearable device for charging the wearable device only when the first fool-proof structure matches with the first locating structure at the side edge of the wearable device. In the related art, the connection to the wearable device has certain drawbacks. For example, in the case of charging with the USB interface, misplug occurs frequently and the USB interface can be damaged. Furthermore, the USB interface provided on the wearable device will reduce the waterproof performance of the wearable device. In the case of charging in the manner of wireless induction, the wearable device has to contain a coil made of copper and the cost of the wearable device will rise. In the case of charging with the Pogo pin connector, misconnect the positive and negative electrodes of the existing Pogo pin connector are usually not differentiated. As such, the user can easily misconnect the positive and negative electrodes, which makes that the wearable device is unable to be charged normally and even the risk of destroying internal circuit of the wearable device exits. In comparison with the related art, the present disclosure provides a charger provided with the first fool-proof structure, which makes that the charger and the wearable device, which are connected for charging, can only be connected in one direction, i.e., the first insert of the first fool-proof structure is inserted into the first locating structure of the wearable device. When the direction is changed, the second insert cannot match with the first locating structure of the wearable device, because the second insert has a width larger than that of the first insert, thus the charger and the wearable device cannot be connected for charging. This ensures that the positive and negative electrodes of the Pogo pin connector of the charger can be correctly connected to the positive and negative electrodes of the Pogo connector of the wearable device when the charger and the wearable device are connected for charging, thereby avoiding the misconnection of the positive and negative electrodes. In addition, when the back shell of the wearable device is made of metal, the first fool-proof structure can prevent the back shell of the wearable device from directly contacting the Pogo pin connector of the charger. In other words, the back shell can be held in the holding groove of the charger only when the first fool-proof structure matches with the first locating structure of the wearable device. This avoids the occurrence of short-circuiting caused by the direct contact between the Pogo pin connector in the holding groove of the charger and the back shell made of metal, and thus ensure the safe use of the charger.

As shown in Figs. 1 and 2, in the specific implementation, the first insert 31 and the second insert 32 are oppositely arranged at two sides at the edge of the holding groove.

Specifically, the first insert and the second insert may be arranged at two side at the edge of the holding groove in a manner of facing each other, or may be arranged at two side at the edge of the holding groove in a manner of being diagonally opposite to each other. In a preferred arrangement, the first insert and the second insert are arranged in the manner of facing each other.

Further, the first fool-proof structure further includes: a locating groove, which is arranged on the surface of the holding groove and is used to match with the bulge structure of the back shell of the wearable device; and/or, a locating bulge, which is arranged on the surface of the holding groove and is used to match with the groove structure of the wearable device.

Specifically, the locating bulge may have any shape, such as a cuboid, a cube, a semi-sphere or a shape of bulging pattern. The locating bulge may be arranged at any position on the surface of the holding groove. For example, the locating bulge may be arranged on the side wall of the holding groove or on the bottom of the holding groove. The locating groove may also have any shape, such as a cuboid, a cube, a semi-sphere or a shape of bulging pattern. A second locating groove may be arranged on the side wall of the holding groove or on the bottom of the holding groove.

In addition, it should be noted that, the number of the locating grooves needs to be the same as the number of the bulge structures on the back shell of the wearable device. The shape of the locating grooves needs to match with the shape of the bulge structures. The distribution of the locating grooves in the holding groove needs to correspond to the distribution of the bulge structures on the back shell. In a similar manner, the number of the locating bulges needs to be the same as the number of the groove structures on the back shell of the wearable device. The shape of the locating bulges needs to match with the shape of the groove structures. The distribution of the locating bulges in the holding groove needs to correspond to the distribution of the groove structures on the back shell.

As shown in Figs. 1 and 2, in the specific implementation, in order to implement a fool-proof function of the charger in charging, the first fool-proof structure further includes: a first magnet 33 and a second magnet 34. The first magnet 33 is arranged in the base 1. The S pole of the first magnet 33 is directed towards the outer surface of the holding groove 11 and is used to engage with a third magnet on the back shell. The N pole of the second magnet 34 is directed towards the outer surface of the holding groove 11 and is used to engage with a fourth magnet on the back shell.

Specifically, the shape and the size of the first magnet and the second magnet of the first fool-proof structure may be the same as those of the third magnet and the fourth magnet inside the back shell of the wearable device. The position of the first magnet in the holding groove corresponds to the position of the third magnet on the back shell of the wearable device. Similarly, the position of the second magnet in the holding groove corresponds to the position of the fourth magnet on the back shell of the wearable device. Additionally, the Pogo pin connector in the holding groove is preferably arranged at a distance from the first magnet and the second magnet. For example, the first magnet and the second magnet are arranged at respective sides of the Pogo pin connecter.

In use, since the first insert matches with the first locating structure at the side edge of the wearable device, the S pole of the first magnet of the first fool-proof structure needs to engage with the N pole of the third magnet in the wearable device and the N pole of the second magnet of the first fool-proof structure needs to engage with the S pole of the fourth magnet in the wearable device. In this way, the Pogo pin connector of the charger can be connected to the Pogo pin connector of the wearable device to charge the wearable device and to further improve the effect of the first fool-proof structure.

In the specific implementation, in order to have a sufficient attraction between the charger and the wearable in charging, the solution is proposed as below to solve this problem, which ensures the stability during the charging and avoids the unstable connection caused by the inclination of connection or the sway. In the solution, there are multiple first magnets which are evenly arranged at positions in the holding groove of the base; or, there are multiple second magnets which are evenly arranged at positions in the holding roove of the base. Alternatively, a solution, where multiple first magnets and multiple second magnets exits, also addresses the problem.

In addition, it should be noted that, the number of the first magnets may equal to the number of the third magnets on the back shell of the wearable device, and the distribution of the first magnets in the holding groove needs to correspond to the distribution of the third magnets on the back shell. Similarly, the number of the second magnets may equal to the number of the fourth magnets on the back shell of the wearable device, and the distribution of the second magnets in the holding groove needs to correspond to the distribution of the fourth magnets on the back shell.

### Embodiment 2

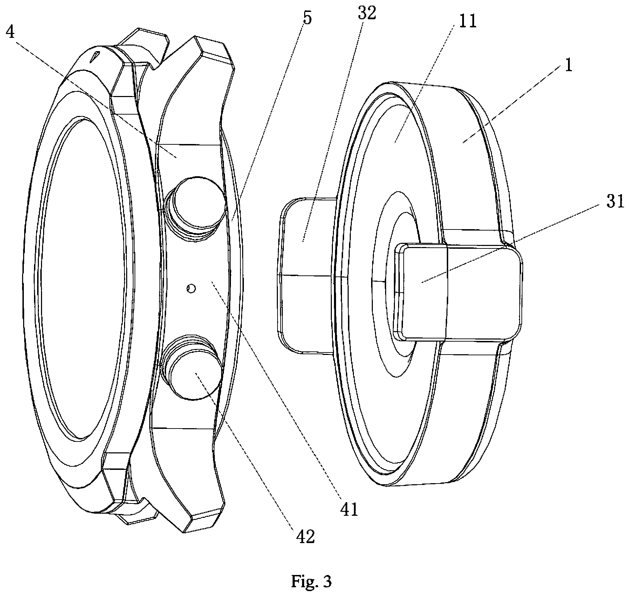

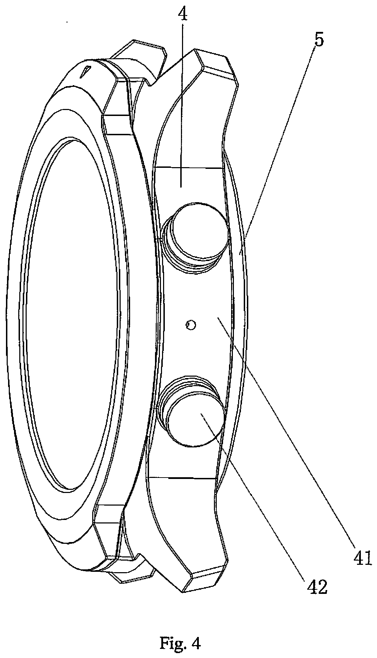

As shown in Figs. 1 to 4, the embodiment 2 of the present disclosure provides an electronic device. The electronic device includes: a charger and a wearable device 4. The charger includes: a base 1 and a first fool-proof structure 3. The base 1 has a holding groove 11 adapted to a back shell of a wearable device. A Pogo pin connector 2 is arranged in the holding groove 11. The first fool-proof structure 3 includes a first insert 31 and a second insert 32, which are arranged at an edge of the holding groove 11. The first insert 31 has a width less than that of the second insert 32. The first insert 31 is used to match with a first locating structure of the wearable device. A first locating structure 41 is arranged at the side edge of the wearable device 4 and matches with the first insert 31 of the charger.

Specifically, the charger in the embodiment 2 is the charger provided by embodiment 1 and has an implementation structure as described with reference to embodiment 1, which will not be repeated here. The wearable device of the present disclosure may be a smartwatch, a smart bracelet, an electronic sphygmomanometer, a virtual reality (VR) device, an augmented reality (AR) device, etc., and may be worn on wrist, neck, head of a user or before the eyes of the user. The preferred device of the solution of the present disclosure is smartwatch. The body of the wearable device is a component containing main electronic devices and is for example the watch head of the smartwatch. The back shell is a shell fastened to the rear surface of the body or on a side surface opposite to the display surface of the wearable device. The structure and shape of the back shell may be designed based on the shape and feature of the wearable device, and may have a circular shape, an ellipse shape, a rectangular shape or any other shape. The back shell may be made of plastic or metal. In addition, the shape of the back shell needs to match with the holding groove of the charger. The first locating structure may be a groove at the side edge of the wearable device of an interspace between two function buttons of the wearable device.

In the embodiment 2 of the present disclosure, in the case where the charger is connected to the wearable device to charge the wearable device, the back shell of the wearable device can be held in the holding groove of the charger only when the first insert of the first fool-proof structure is inserted into the first locating structure of the wearable device. Then, the Pogo pin connector in the holding groove is connected to the Pogo pin connector on the back shell of the wearable device, so as to charge the wearable device. In the case where the first insert is not inserted into the first locating device, the back shell of the wearable device cannot be held in the holding groove, and the wearable device cannot be charged.

In the solution of the present disclosure, the charger is provided with a first fool-proof structure. When the charger is connected to the wearable device to charge the wearable device, the Pogo pin connector located in the holding groove of the charger can be connected to the Pogo pin connector of the wearable device for charging the wearable device only when the first fool-proof structure matches with the first locating structure at the side edge of the wearable device. In the related art, the connection to the wearable device has certain drawbacks. For example, in the case of charging with the USB interface, misplug occurs frequently and the USB interface can be damaged. Furthermore, the USB interface provided on the wearable device will reduce the waterproof performance of the wearable device. In the case of charging in the manner of wireless induction, the wearable device has to contain a coil made of copper and the cost of the wearable device will rise. In the case of charging with the Pogo pin connector, misconnect the positive and negative electrodes of the existing Pogo pin connector are usually not differentiated. As such, the user can easily misconnect the positive and negative electrodes, which makes that the wearable device is unable to be charged normally and even the risk of destroying internal circuit of the wearable device exits. In comparison with the related art, the present disclosure provides a charger provided with the first fool-proof structure, which makes that the charger and the wearable device, which are connected for charging, can only be connected in one direction, i.e., the first insert of the first fool-proof structure is inserted into the first locating structure of the wearable device. When the direction is changed, the second insert cannot match with the first locating structure of the wearable device, because the second insert has a width larger than that of the first insert, thus the charger and the wearable device cannot be connected for charging. This ensures that the positive and negative electrodes of the Pogo pin connector of the charger can be correctly connected to the positive and negative electrodes of the Pogo connector of the wearable device when the charger and the wearable device are connected for charging, thereby avoiding the misconnection of the positive and negative electrodes. In addition, when the back shell of the wearable device is made of metal, the first fool-proof structure can prevent the back shell of the wearable device from directly contacting the Pogo pin connector of the charger. In other words, the back shell can be held in the holding groove of the charger only when the first fool-proof structure matches with the first locating structure of the wearable device. This avoids the occurrence of short-circuiting caused by the direct contact between the Pogo pin connector in the holding groove of the charger and the back shell made of metal, and thus ensure the safe use of the charger.

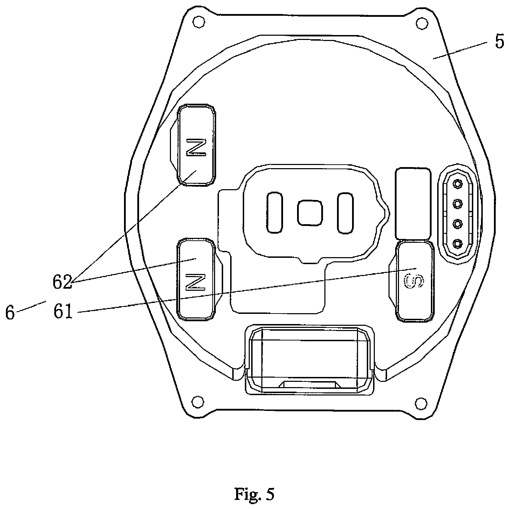

As shown in Figs. 1, 2, 5 and 6, in the specific implementation, the wearable device may also include a second fool-proof structure 6. The second fool-proof structure 6 includes a third magnet 61 and a fourth magnet 62. The third magnet 61 is arranged on the inner surface of the back shell 5 of the wearable device and has an N pole facing the inner surface of the back shell 5. The fourth magnet 62 is arranged on the inner surface of the back shell 5 and has an S pole facing the inner surface of the back shell 5. The third magnet 61 is used to engage with the first magnet 33 of the charger. The fourth magnet 62 is used to engage with the second magnet 34 of the charger.

Specifically, the third magnet and the fourth magnet are arranged on the inner surface of the back shell. In the course of normally charging the wearable device and normally wearing the wearable device, the third magnet and the fourth magnet will not be abraded. As such, the impact on the life of the magnets of the damage to the surface coating over the third magnet and the fourth magnet caused by abrasion, knocking or scratching is avoided, and the technology difficulty of the surface treatment of the exposed magnets is lowered. At the same time, the arrangement of the second fool-proof structure, which cooperates with the first fool-proof structure, further strengthens the effect of fool-proof. As such, when the charger is connected to the wearable device to charge the wearable device, only in the case where not only the insert matches with the first locating structure, but the first magnet and the second magnet of the first fool-proof structure respectively engage with the third magnet and the fourth magnet of the second fool-proof structure, the back shell of the wearable device can be held in the holding groove of the charger and the Pogo pin connector of the charger can be connected to the Pogo pin connector of the wearable device, so as to charge the wearable device. Otherwise, when the first fool-proof does not match with the first locating structure and the second fool-proof structure of the wearable device, the back shell of the wearable cannot be held in the holding groove and the wearable device cannot be charged.

In the specific implementation, in order to connect the charger to the wearable device to charge the wearable device, an attraction large enough between the charger and the wearable device is required to ensure the stability during charging and to avoid the unstable connection caused by the inclination of connection or the sway. Therefore, a solution is described below to address the problem. In the solution, there are multiple third magnets which are evenly arranged on the inner surface of the back shell; or, there are multiple fourth magnets which are evenly arranged on the inner surface of the back shell. Alternatively, a solution, where multiple third magnets and multiple fourth magnets exits, also addresses the problem.

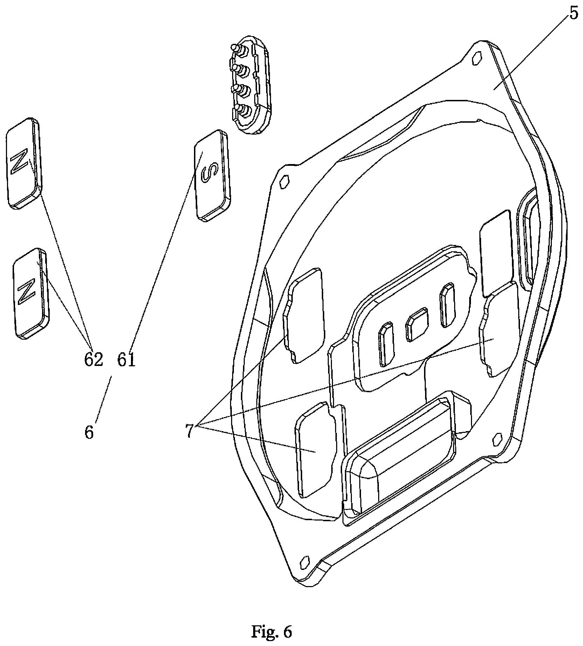

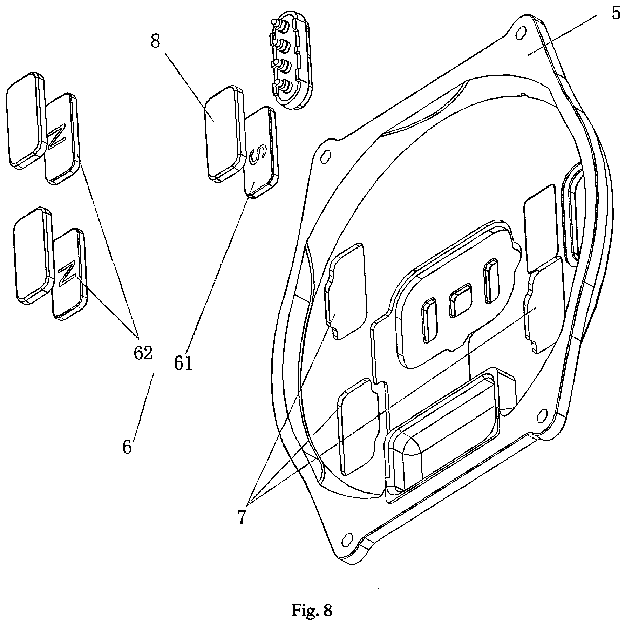

As shown in Figs. 6 and 8, in the specific implementation, installation grooves 7 are arranged on the inner surface of the back shell 5. The third magnet 61 and the fourth magnet 62 are respectively arranged in the installation grooves 7.

Specifically, the installation grooves arranged on the inner surface of the back shell are shaped according to the shape of the third magnet and the shape of the fourth magnet. The depth of the installation grooves equals to the depth of the third magnet and the fourth magnet. The installation grooves may be formed by concaving the inner surface of the back shell towards the outer surface of the back shell, or may be formed by arranging side walls of the installation grooves protruding from the inner surface of the back shell. Alternatively, the installation grooves may be arranged in such a way that the third magnet or the fourth magnet is clamped in an interference manner. In other words, the openings of the installation grooves are slightly smaller than the profiles of the third magnet and the fourth magnet, which enables the third magnet or the fourth magnet to be directly clamped into the installation grooves.

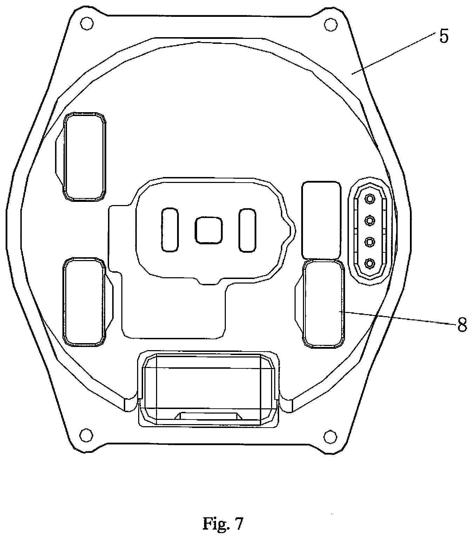

As shown in Figs. 7 and 8, in the specific implementation, the wearable device of the present disclosure further includes one or more magnetic flux concentrating covers 8. The number of the magnetic flux concentrating covers 8 equals to the sum of the number of the third magnet 61 and the fourth magnet 62. The magnetic flux concentrating covers 8 are respectively arranged on a surface of the S pole of the third magnet 61 and a surface of the N pole of the fourth magnet 62.

Specifically, the shape of the magnetic flux concentrating cover 8 may be the same as the shape of the surface of the S pole of the third magnet. Each magnetic flux concentrating cover 8 arranged on the surface of the S pole of the third magnet may be a plate or a cap and may be attached to the surface of the S pole of the third magnet using adhesive. Similarly, each magnetic flux concentrating cover 8 arranged on the surface of the N pole of the fourth magnet may be attached using adhesive.

In the specific implementation, the second fool-proof structure further includes a bulge structure and/or a groove structure. The bulge structure is arranged on the outer surface of the back shell and is used to match with the locating groove of the charger. The groove structure is arranged on the outer surface of the back shell and is used to match with the locating bulge of the charger. Specifically, the bulge structure may have any shape, such as a cuboid, a cube, a semi-sphere or a shape of bulging pattern. The bulge structure may be arranged at any position on the outer surface of the back shell. For example, the bulge structure may be arranged at the side edge of the back shell or on the outer surface of the back shell. When the wearable device is a smartwatch, the bulge structure may be either a bulge at the proximity of a button at the side edge of the smartwatch or a bulge at the crown. The groove structure may also have any shape, such as a cuboid, a cube, a semi-sphere or a shape of bulging pattern. The groove structure may be arranged at the side edge of the back shell or on the outer surface of the outer shell. When the wearable device is a smartwatch, the groove structure may be either a concave line on the outer surface of the back shell of the watch head or a groove arranged on the side surface of the smartwatch for receiving the button.

The above description is merely preferred embodiments of the present disclosure and not to limit the present disclosure. For those skilled in the art, all of the modifications, equivalents and improvements made to the above embodiments based on the essence of the present disclosure are intended to fall within the scope of the present disclosure.

## Claims

1. A system, comprising:
a charger comprising a base (1) and a first fool-proof structure (3); and
a wearable device (4) comprising a first locating structure (41) arranged at a side edge of the wearable device (4);
wherein the base (1) has a holding groove (11), the holding groove (11) is adapted to a back shell (5) of the wearable device (4), a Pogo pin connector (2) is arranged in the holding groove (11);
wherein the first fool-proof structure (3) comprises a first insert (31) and a second insert (32), the first insert (31) and the second insert (32) are arranged at an edge of the holding groove (11), the first insert (31) has a width less than that of the second insert (32), the first insert (31) of the first fool-proof structure (3) is used to match with the first locating structure (41) at a side edge of the wearable device (4), and the first fool-proof structure (3) is configured to make that the charger and the wearable device (4) are connected only in one direction by inserting the first insert (31) of the first fool-proof structure (3) into the first locating structure (41) of the wearable device (4),
wherein the Pogo pin connector (2) of the charger is connected to a Pogo pin connector (2) of the wearable device (4) for charging the wearable device (4) only when the first insert (31) of the first fool-proof structure (3) matches with the first locating structure (41) of the wearable device (4),
**characterized in that**,
the first locating structure (41) is an interspace between two function buttons at the side edge of the wearable device (4).

2. The system according to claim 1, wherein the first insert (31) and the second insert (32) are oppositely arranged at two sides at the edge of the holding groove (11).

3. The system according to claim 1, wherein the first fool-proof structure (3) further comprises:
at least one first magnet (33), which is arranged in the base, the first magnet has an S pole, which is directed towards an outer surface of the holding groove (11) and is used to engage with a third magnet (61) on the back shell (5); and
at least one second magnet (34), which is arrange in the base, the second magnet has an N pole, which is directed towards the outer surface of the holding groove (11) and is used to engage with a fourth magnet (62) on the back shell (5).

4. The system according to claim 3, wherein the at least one first magnet (33) comprises a plurality of first magnets (33), the first magnets (33) are evenly arranged at a plurality of positions in the base corresponding to the holding groove (11).

5. The system according to claim 3, wherein the at least one second magnet (34) comprises a plurality of second magnets (34), the second magnets (34) are evenly arranged at a plurality of positions in the base corresponding to the holding groove (11).

6. The system according to claim 3, wherein the wearable device (4) further comprises a second fool-proof structure (6), and the second fool-proof structure (6) comprises:
at least one third magnet (61), which is arranged on an inner surface of the back shell (5) of the wearable device (4), the third magnet (61) has an N pole, which faces the inner surface of the back shell (5) and is used to engage with a first magnet (33) of the charger; and
at least one fourth magnet (62), which is arranged on the inner surface of the back shell (5) of the wearable device (4), the fourth magnet (62) has an S pole, which faces the inner surface of the back shell (5) and is used to engage with a second magnet (34) of the charger,
wherein the back shell (5) of the wearable device (4) is held in the holding groove (11) of the charger and the Pogo pin connector of the charger is connected to the Pogo pin connector (2) of the wearable device (4), after the first magnet (33) and the second magnet (34) of the first fool-proof structure (3) respectively engage with the third magnet (61) and the fourth magnet (62) of the second fool-proof structure (6).

7. The system according to claim 6, wherein
the at least one third magnet (61) comprises a plurality of third magnets (61), the third magnets (61) are evenly arranged on the inner surface of the back shell (5); and/or
the at least one fourth magnet (62) comprises a plurality of fourth magnets (62), the fourth magnets (62) are evenly arranged on the inner surface of the back shell (5)

8. The system according to claim 6, wherein the wearable device (4) further comprises at least one
magnetic flux concentrating cover (8), a number of the at least one magnetic flux concentrating cover equals to a sum of a number of the at least one third magnet (61) and a number of the at least one fourth magnet (62),
the at least one magnetic flux concentrating cover is respectively arranged on a surface of an S pole of the third magnet (61) and a surface of an N pole of the fourth magnet (62).

## Patentansprüche

1. Ein System umfasst:
ein Ladegerät, das eine Basis (1) und eine erste narrensichere Struktur (3) umfasst; und
eine tragbare Vorrichtung (4), die eine erste Lokalisierungsstruktur (41) umfasst, die an einer Seite der Kante der tragbaren Vorrichtung (4) angeordnet ist:
wobei die Basis (1)
eine Haltenut (11) aufweist, die Haltenut (11) an einem hinteren Gehäuse (5) der tragbaren Vorrichtung (4) angepasst ist, ein Pogo-Pin-Konnektor (2) in der Haltenut (11) angeordnet ist;
wobei die erste narrensichere Struktur (3) einen ersten Einsatz (31) und einen zweiten Einsatz (32) umfasst, der erste Einsatz (31) und der zweite Einsatz (32) an einer Kante der Haltenut (11) angeordnet sind, der erste Einsatz (31) eine geringere Breite als der zweite Einsatz (32) aufweist, der erste Einsatz (31) der ersten narrensicheren Struktur (3) verwendet wird, um die erste Lokalisierungsstruktur (41) an eine Seitenkante der tragbaren Vorrichtung (4) anzupassen, und die erste narrensichere Struktur (3) so konfiguriert ist, dass sie das Ladegerät und die tragbare Vorrichtung (4) nur in einer Richtung verbinden, indem der erste Einsatz (31) der ersten narrensicheren Struktur (3) in die erste Lokalisierungsstruktur (41) der tragbaren Vorrichtung (4) eingeführt wird, wobei der Pogo-Pin-Konnektor (2) des Ladegeräts mit einem Pogo-Pin-Konnektor (2) der tragbaren Vorrichtung (4) verbunden ist, um die tragbare Vorrichtung (4) nur dann aufzuladen, wenn der erste Einsatz (31) der ersten narrensicheren Struktur (3) mit der ersten Lokalisierungsstruktur (41) der tragbaren Vorrichtung (4) übereinstimmt, **dadurch gekennzeichnet, dass** die erste Lokalisierungsstruktur (41) ein Zwischenraum zwischen zwei Funktionstasten an der Seitenkante der tragbaren Vorrichtung (4) ist.

2. Das System nach Anspruch 1, wobei der erste Einsatz (31) und der zweite Einsatz (32) an zwei Seiten an der Kante der Haltenut (11) einander gegenüberliegend angeordnet sind.

3. Das System nach Anspruch 1, wobei die erste narrensichere Struktur (3) ferner umfasst:
mindestens einen ersten Magneten (33), der in der Basis angeordnet ist, der erste Magnet einen S-Pol aufweist, der zu einer Außenfläche der Haltenut (11) gerichtet ist und dazu verwendet wird, mit einem dritten Magneten (61) an dem hinteren Gehäuse (5) in Eingriff zu kommen; und
mindestens einen zweiten Magneten (34), der in der Basis angeordnet ist, der zweite Magnet einen N-Pol aufweist, der zu der Außenfläche der Haltenut (11) gerichtet ist und dazu verwendet wird, mit einem vierten Magneten (62) an dem hinterem Gehäuse (5) in Eingriff zu kommen.

4. Das System nach Anspruch 3, wobei der mindestens eine erste Magnet (33) eine Vielzahl von ersten Magneten (33) umfasst, die ersten Magnete (33) gleichmäßig an einer Vielzahl von Positionen in der Basis entsprechend der Haltenut (11) angeordnet sind.

5. Das System nach Anspruch 3, wobei der mindestens eine zweite Magnet (34) eine Vielzahl von zweiten Magneten (34) umfasst, die zweiten Magnete (34) gleichmäßig an einer Vielzahl von Positionen in der Basis entsprechend der Haltenut (11) angeordnet sind.

6. Das System nach Anspruch 3, wobei die tragbare Vorrichtung (4) ferner eine zweite narrensichere Struktur (6) umfasst, und die zweite narrensichere Struktur (6) umfasst:
mindestens einen dritten Magneten (61), der an einer Innenfläche des hinteren Gehäuses (5) der tragbaren Vorrichtung (4) angeordnet ist, der dritte Magnet (61) einen N-Pol aufweist, der der Innenfläche des hinteren Gehäuses (5) zugewandt ist und dazu verwendet wird, mit einem ersten Magneten (33) des Ladegeräts in Eingriff zu kommen; und
mindestens einen vierten Magneten (62), der an der Innenfläche des hinteren Gehäuses (5) der tragbaren Vorrichtung (4) angeordnet ist, der vierte Magnet (62) einen S-Pol aufweist, der der Innenfläche des hinteren Gehäuses (5) zugewandt ist und dazu verwendet wird, mit einem zweiten Magneten (34) des Ladegeräts in Eingriff zu kommen,
wobei das hintere Gehäuse (5) der tragbaren Vorrichtung (4) in der Haltenut (11) des Ladegeräts gehalten wird und der Pogo-Pin-Konnektor des Ladegeräts mit dem Pogo-Pin-Konnektor (2) der tragbaren Vorrichtung (4) verbunden wird, nachdem der erste Magnet (33) und der zweite Magnet (34) der ersten narrensicheren Struktur (3) jeweils mit dem dritten Magneten (61) und dem vierten Magneten (62) der zweiten narrensicheren Struktur (6) in Eingriff kommen.

7. Das System nach Anspruch 6, wobei
der mindestens eine dritte Magnet (61) eine Vielzahl von dritten Magneten (61) umfasst, die dritten Magnete (61) gleichmäßig auf der Innenfläche des hinteren Gehäuses (5) angeordnet sind;
und/oder
der mindestens eine vierte Magnet (62) eine Mehrzahl von vierten Magneten (62) umfasst, die vierten Magnete (62) gleichmäßig auf der Innenfläche des hinteren Gehäuses (5) angeordnet sind.

8. Das System nach Anspruch 6, wobei die tragbare Vorrichtung (4) ferner mindestens eine
Magnetfluss Konzentrationsschirm (8) umfasst, eine Anzahl der mindestens einen Magnetfluss Konzentrationsschirm gleich einer Summe einer Anzahl des mindestens einen dritten Magneten (61) und einer Anzahl des mindestens einen vierten Magneten (62) ist,
die mindestens eine Magnetfluss Konzentrationsschirm jeweils auf einer Oberfläche eines S-Pols des dritten Magneten (61) und einer Oberfläche eines N-Pols des vierten Magneten (62) angeordnet ist.

## Revendications

1. Un système comprenant :
un chargeur comprenant une base (1) et une première structure infaillible (3) ; et
un dispositif portable (4) comprenant une première structure de localisation (41) disposée sur un bord latéral du dispositif portable (4) :
dans lequel la base (1) présente une rainure de retenue (11), dans lequel la rainure de retenue (11) étant fixée à une coque arrière (5) du dispositif portable (4), un connecteur Pogo pin (2) est disposé dans la rainure de retenue (11) ;
dans lequel la première structure infaillible (3) comprenant un premier insert (31) et un second insert (32), le premier insert (31) et le second insert (32) étant disposés sur un bord de la rainure de retenue (11), le premier insert (31) ayant une largeur inférieure à celle du second insert (32), le premier insert (31) de la première structure infaillible (3) étant utilisé pour s'accoupler avec la première structure de localisation (41) sur un bord latéral du dispositif portable(4), et la première structure infaillible (3) est configurée ce que le chargeur et le dispositif portable (4) ne soient connectées que dans une seule direction, en utilisant le premier insert (31) de la première structure infaillible (3) est inséré dans la première structure de localisation (41) du dispositif portable (4),
dans lequel le connecteur Pogo pin (2)
du chargeur est connecté à un connecteur Pogo pin (2) du dispositif portable (4) pour charger le dispositif portable (4) seulement lorsque le premier insert (31) de la première structure infaillible (3) coïncide avec la première structure de localisation (41) du dispositif portable (4),
**caractérisé en ce que**,
la première structure de localisation (41) est un espace entre deux boutons de fonction sur le bord latéral du dispositif portable (4).

2. Le système selon la revendication 1, dans lequel le premier insert (31) et le deuxième insert (32) sont disposés en regard l'un de l'autre sur deux côtés au bord de la rainure de retenue (11).

3. Le système selon la revendication 1, dans lequel la première structure infaillible (3) comprend en outre :
au moins un premier aimant (33) disposé dans la base, le premier aimant ayant un pôle S dirigé vers une surface extérieure de la rainure de retenue (11) et étant utilisé pour s'engager avec un troisième aimant (61) sur la coque arrière (5) ; et au moins un deuxième aimant (34) disposé dans la base, le deuxième aimant ayant un pôle N dirigé vers la surface extérieure de la rainure de retenue (11) et étant utilisé pour s'engager avec un quatrième aimant (62) sur la coque arrière (5).

4. Le système selon la revendication 3, dans lequel au moins un premier aimant (33) comprend une pluralité de premiers aimants (33), les premiers aimants (33) étant disposés uniformément en une pluralité de positions dans la base correspondant à la rainure de retenue (11).

5. Le système selon la revendication 3, dans lequel au moins un deuxième aimant (34) comprend une pluralité de deuxièmes aimants (34), les deuxièmes aimants (34) étant disposés uniformément en une pluralité de positions dans la base correspondant à la rainure de retenue (11).

6. Le système selon la revendication 3, dans lequel le dispositif portable (4) comprend en outre une deuxième structure infaillible (6), et la deuxième structure infaillible (6) comprend :
au moins un troisième aimant (61) disposé sur une surface intérieure de la coque arrière (5) du dispositif portable (4), le troisième aimant (61) ayant un pôle N faisant face à la surface intérieure de la coque arrière (5) et étant utilisé pour venir en contact avec un premier aimant (33) du chargeur ; et
au moins un quatrième aimant (62) disposé sur la surface intérieure de la coque arrière (5) du dispositif portable (4), le quatrième aimant (62) ayant un pôle S faisant face à la surface intérieure de la coque arrière (5) et étant utilisé pour venir en prise avec un deuxième aimant (34) du chargeur,
dans lequel la coque arrière (5) du dispositif portable (4) est maintenue dans la rainure de retenue (11) du chargeur et le connecteur Pogo pin du chargeur est connecté au connecteur Pogo pin (2) du dispositif portable (4) après que le premier aimant (33) et le deuxième aimant (34) de la première structure infaillible (3) se soient respectivement engagés avec le troisième aimant (61) et le quatrième aimant (62) de la deuxième structure infaillible (6).

7. Le système selon la revendication 6, dans lequel
le au moins un troisième aimant (61) comprend une pluralité de troisièmes aimants (61), les troisièmes aimants (61) sont disposés uniformément sur la surface intérieure de la coque arrière (5) ;
et/ou
le au moins un quatrième aimant (62) comprend une pluralité de quatrièmes aimants (62), les quatrièmes aimants (62) sont disposés uniformément sur la surface intérieure du coque arrière (5).

8. Le système selon la revendication 6, dans lequel le dispositif portable (4) comprend en outre au moins un écran de concentration de flux magnétique (8), un nombre dudit au moins un écran de concentration de flux magnétique étant égal à une somme d'un nombre dudit au moins un troisième aimant (61) et d'un nombre dudit au moins un quatrième aimant (62),
le au moins un écran de concentration de flux magnétique est disposé respectivement sur une surface d'un pôle S du troisième aimant (61) et une surface d'un pôle N du quatrième aimant (62).
